# EUROPEAN PATENT APPLICATION

(11) **EP 4 475 623 A1**
(43) Date of publication of application: **11.12.2024**
(21) Application number: 23759241.5
(22) Date of filing: 23.02.2023
(51) Int. Cl.: H04W 80/02, H04L 43/0811

(54) **LINK INFORMATION SENDING METHOD, AND COMMUNICATION APPARATUS AND SYSTEM**

(30) Priority: 25.02.2022 CN 202210179898
(71) Applicant: Huawei Technologies Co., Ltd., Shenzhen, Guangdong 518129 (CN)
(72) Inventor: PANG, Donglei, Shenzhen, Guangdong 518129 (CN); WANG, Haibo, Shenzhen, Guangdong 518129 (CN)
(74) Representative: Grünecker Patent- und Rechtsanwälte PartG mbB
(86) International application number: PCT/CN2023/077909
(87) International publication number: WO 2023/160619

(57) **Abstract**

This application provides a link information sending method, and a communication apparatus and system, and is applied to the field of communications technologies. The method may include: A first node determines first link information, where the first link information indicates a link from the first node to a second node. The first node receives a first packet from the second node, where the first packet includes second link information and first indication information, the second link information indicates a link from the second node to the first node, and the first indication information indicates that the second link information is to-be-checked link information. Then, the first node may check the first link information and the second link information based on the first indication information. Based on this solution, after discovering link information to the second node, the first node does not immediately distribute the link information to another neighbor node, but performs validity check after receiving the second link information sent by the second node. This can avoid a waste of communication resources caused by distributing invalid link information.

## Description

This application claims priority to Chinese Patent Application No. 202210179898.8, filed with the China National Intellectual Property Administration on February 25, 2022 and entitled "LINK INFORMATION SENDING METHOD AND COMMUNICATION APPARATUS AND SYSTEM", which is incorporated herein by reference in its entirety.

### TECHNICAL FIELD

This application relates to the field of communications technologies, and in particular, to a link information sending method, and a communication apparatus and system.

### BACKGROUND

The border gateway protocol (border gateway protocol, BGP) shortest path first (shortest path first, SPF) protocol is a protocol used to establish an underlay (underlay) network. A node in a network may discover link information to a neighbor node based on BGP configuration information, and distribute the discovered link information in the entire network, so that each node in the network learns of the link information discovered by the nodes in the entire network. The node may generate route information based on the link information learned of by the node, so that the nodes in the network may access each other via the generated route information, and successfully construct an underlay network.

Because the link information discovered by the node is unidirectional link information, for example, a link from a first node to a second node in a pair of neighbor nodes, the pair of neighbor nodes may discover two pieces of unidirectional link information, for example, the link from the first node to the second node and a link from the second node to the first node. In a current technology, after collecting link information in the entire network, any one of the nodes may perform validity check on two pieces of unidirectional link information discovered by any pair of neighbor nodes, to determine whether a link corresponding to the two pieces of unidirectional link information is bidirectionally reachable. If the link is bidirectionally reachable, the node considers that the link between the pair of neighbor nodes is valid.

However, in some cases, the link information discovered by the node in the network may be invalid. Distributing the invalid link information wastes communication resources and the invalid link information increases processing load of the node.

### SUMMARY

This application provides a link information sending method, and a communication apparatus and system, to resolve a problem of a waste of communication resources because a node distributes invalid link information in a network.

To achieve the foregoing objective, this application uses the following technical solutions.

According to a first aspect, a link information sending method is provided. The link information sending method may be applied to a first node, and include: determining first link information, where the first link information indicates a link from the first node to a second node; receiving a first packet from the second node, where the first packet includes second link information and first indication information, the second link information indicates a link from the second node to the first node, and the first indication information indicates that the second link information is to-be-checked link information; and checking the first link information and the second link information based on the first indication information.

Based on the solution provided in this application, after discovering link information to the second node, the first node does not immediately distribute the link information to another neighbor node, but performs validity check after receiving the second link information sent by the second node. This can avoid distributing invalid link information and reduce a waste of communication resources.

With reference to the first aspect, in a possible implementation, the first packet is a BGP update packet, and the first indication information is carried in a first TLV field of the first packet. Based on this solution, that the TLV field indicates that the second link information is the to-be-checked link information is compatible with an existing communication protocol and is easy to implement.

With reference to the first aspect, in a possible implementation, an attribute of the first TLV field includes a non-transitive attribute, and the non-transitive attribute indicates that the first TLV field is not to be forwarded. Based on this solution, if the first node forwards the second link information, the first node does not need to indicate that the second link information needs to be checked. In other words, the second link information discovered by the second node is only checked by the first node, and another node may directly forward the second link information without checking. This solution can avoid a waste of processing resources of the another node due to validity check performed by each node, and can reduce complexity of implementing the solutions.

With reference to the first aspect, in a possible implementation, the link information sending method may further include: determining that the first link information and the second link information are used for SPT calculation if the first link information and the second link information meet a validity check condition.

With reference to the first aspect, in a possible implementation, the link information sending method may further include: sending a second packet to a neighbor node except the second node if the first link information and the second link information meet the validity check condition, where the second packet includes the first link information.

With reference to the first aspect, in a possible implementation, the link information sending method may further include: sending a third packet to a neighbor node except the second node if the first link information and the second link information meet the validity check condition, where the third packet includes the second link information.

Based on this solution, the first link information and the second link information are distributed in an entire network only when the first link information and the second link information meet the validity check condition.

With reference to the first aspect, in a possible implementation, the third packet does not include the first indication information. In other words, the second link information is only checked by the first node, and after being forwarded by the first node, the second link information does not need to be checked by another node.

With reference to the first aspect, in a possible implementation, the first link information includes a first source address and a first destination address, and the second link information includes a second source address and a second destination address. That the first link information and the second link information meet the validity check condition may include: The first source address is the same as the second destination address, the second source address is the same as the first destination address, and the first source address, the first destination address, the second source address, and the second destination address are in a same network segment.

With reference to the first aspect, in a possible implementation, the link information sending method may further include: determining that the first link information and the second link information are not used for shortest path tree SPT calculation if the first link information and the second link information do not meet a validity check condition.

With reference to the first aspect, in a possible implementation, the link information sending method may further include: determining not to send the first link information and the second link information to a neighbor node except the second node if the first link information and the second link information do not meet the validity check condition.

With reference to the first aspect, in a possible implementation, the link information sending method may further include: sending a fourth packet to the second node, where the fourth packet includes the first link information and second indication information, and the second indication information indicates that the first link information is to-be-checked link information.

With reference to the first aspect, in a possible implementation, the fourth packet is a BGP update packet, and the second indication information is carried in a second TLV field of the fourth packet.

With reference to the first aspect, in a possible implementation, an attribute of the second TLV field includes a non-transitive attribute, and the non-transitive attribute indicates that the second TLV field is not to be forwarded.

According to a second aspect, this application provides a communication apparatus, configured to implement the foregoing method. The communication apparatus may include a corresponding module, unit, or means (means) for implementing the foregoing method. The module, unit, or means may be implemented by hardware, or may be implemented by software, or may be implemented by hardware executing corresponding software. The hardware or the software includes one or more modules or units corresponding to the foregoing functions.

In a possible implementation, the communication apparatus includes a processing module and a transceiver module. The processing module is configured to invoke instructions to perform a message processing or control operation performed by the communication apparatus side in the method in the first aspect. The transceiver module is configured to perform a message receiving and sending operation performed by the communication apparatus side in the method in the first aspect.

According to a third aspect, a communication apparatus is provided, including a processor. The processor is configured to perform, after being coupled to a memory and reading computer instructions stored in the memory, the method according to the first aspect according to the instruction.

In a possible implementation, the communication apparatus further includes the memory, and the memory is configured to store the computer instructions.

In a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, a related circuit, or the like.

In a possible implementation, the communication apparatus may be a chip or a chip system. When the communication apparatus is the chip system, the communication apparatus may include a chip, or may include the chip and another discrete device.

In a possible implementation, when the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fourth aspect, a computer-readable storage medium is provided. The computer-readable storage medium stores instructions, and when the instructions are run on a computer, the computer is enabled to perform the method according to the first aspect.

According to a fifth aspect, a computer program product including instructions is provided. When the computer program product runs on a computer, the computer is enabled to perform the method according to the first aspect.

For technical effects brought by possible implementation of any one of the second aspect to the fifth aspect, refer to technical effects brought by different implementations of the first aspect. Details are not described herein again.

### BRIEF DESCRIPTION OF DRAWINGS

FIG. 1 is a schematic diagram of a pair of neighbor nodes according to an embodiment of this application;
FIG. 2 is a schematic structural diagram of an underlay network according to an embodiment of this application;
FIG. 3 is a schematic structural diagram of a communication system according to an embodiment of this application;
FIG. 4 is a schematic structural diagram of a communication system according to an embodiment of this application;
FIG. 5 is a schematic structural diagram of a communication device according to an embodiment of this application;
FIG. 6 is a flowchart of a link information sending method according to an embodiment of this application;
FIG. 7 is a schematic diagram of a format of a link NLRI field according to an embodiment of this application;
FIG. 8 is a schematic structural diagram of a first TLV field according to an embodiment of this application;
FIG. 9 is a flowchart of another link information sending method according to an embodiment of this application; and
FIG. 10 is a schematic structural diagram of a communication apparatus according to an embodiment of this application.

### DESCRIPTION OF EMBODIMENTS

For ease of understanding, technical terms and conventional technologies in this application are first briefly described.

BGP: The BGP is a border gateway protocol (border gateway protocol, BGP). In the BGP, a node establishes a BGP peer relationship with another node connected to the node through a local interface. An address of a neighbor node may be preconfigured for a node, so that the node can discover a BGP neighbor and establish the BGP peer relationship based on the configured address of the neighbor node. The address of the neighbor node may alternatively be referred to as a peer (peer) address. The peer address configured for the node may be a host address or an interface address. In other words, the BGP peer relationship may be established between nodes based on the host address (for example, an address of a virtual loopback (loopback) interface), or the BGP peer relationship may be established based on the interface address.

In embodiments of this application, the neighbor node is a node for establishing a BGP peer relationship. This is described herein in a unified manner.

It should be noted that an interface of a node may have one primary address and a plurality of secondary addresses, and either the primary address or the secondary addresses may be used as a peer address. This is described herein in a unified manner.

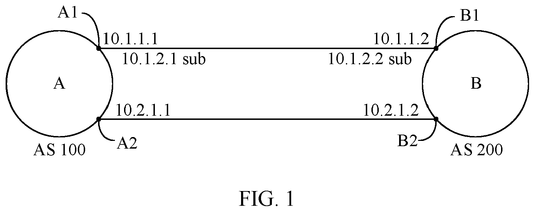

For example, FIG. 1 is a schematic diagram of a pair of neighbor nodes. As shown in FIG. 1, a host address of a node A is 1.1.1.1, a host address of a node B is 2.2.2.2, and there are two direct links (a link between an interface A1 and an interface B 1, and a link between an interface A2 and an interface B2) between the node A and the node B. A primary address of an interface A1 is 10.1.1.1, and a primary address of an interface B1 is 10.1.1.2. A secondary address of the interface A1 is 10.1.2.1, and a secondary address of the interface B1 is 10.1.2.2. A primary address of an interface A2 is 10.2.1.1, and a primary address of an interface B2 is 10.2.1.2. For example, BGP neighbor information is configured for the node A. A peer address (that is, an address of a neighbor node) configured for the node A may be the host address 2.2.2.2 of the node B, or the interface address 10.1.1.2, the interface address 10.1.2.2, or the interface address 10.2.1.2 of the node B. For example, BGP neighbor information is configured for the node B. A peer address (that is, an address of a neighbor node) configured for the node B may be the host address 1.1.1.1 of the node A, or the interface address 10.1.1.1, the interface address 10.1.2.1, or the interface address 10.2.1.1 of the node A.

It should be noted that an example in which an address is an Internet Protocol (internet protocol, IP) address is used for description in FIG. 1. In addition, the IP address may have a corresponding address mask, which is not shown in FIG. 1 for brevity. A network address corresponding to the IP address may be obtained by performing an AND operation on the IP address and the address mask. If network addresses corresponding to different IP addresses are the same, it indicates that the different IP addresses belong to a same network segment. For example, it is assumed that address masks of the IP address 10.1.1.1 and the IP address 10.1.1.2 in FIG. 1 are both 255.255.255.0, so that network addresses corresponding to the IP address 10.1.1.1 and the IP address 10.1.1.2 are both 10.1.1.0. This indicates that the IP address 10.1.1.1 and the IP address 10.1.1.2 are in a same network segment.

BGP SPF: The BGP SPF, that is, a BGP shortest path first (shortest path first, SPF) protocol, is a protocol used to establish an underlay network. A node in a network may discover a link to a neighbor node based on configuration information (for example, a peer address in the configuration information) of a BGP neighbor, and distribute the discovered link in the entire network. In this way, each node in the network learns of the link discovered by the nodes in the entire network, and each node may generate routing information based on the link discovered by the nodes in the entire network, so that the nodes in the network can communicate with each other through the generated routing information, and successfully construct an underlay network.

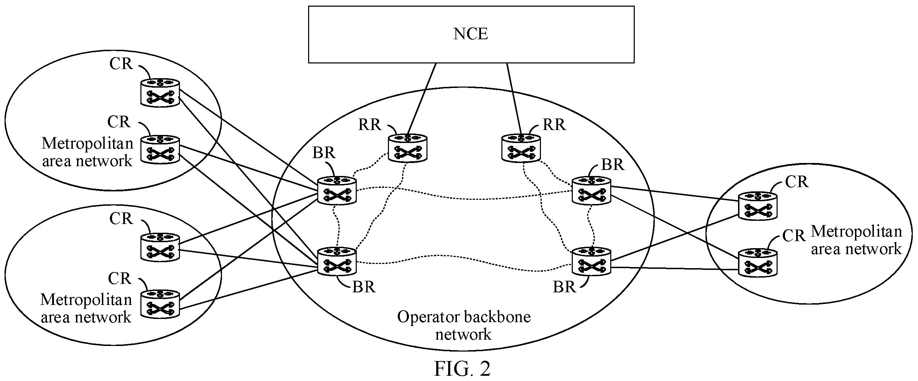

FIG. 2 is a schematic structural diagram of an underlay network. As shown in FIG. 2, the network may include an operator backbone network and a metropolitan area network. The operator backbone network may include a route reflector (route reflector, RR) and a backbone router (backbone router, BR). The metropolitan area network may include a core router (core router, CR). The BR in the operator backbone network may be connected to the CR in the metropolitan area network, and different BRs may be connected to each other. The BR may also be connected to the RR, and the RR may be connected to a network control engine (network control engine, NCE). The network may use the BGP SPF for networking in a networking stage. For example, the node A and the node B in FIG. 1 may be two directly connected BRs.

The following uses the node A and the node B shown in FIG. 1 as an example to describe how a node in a network discovers a link.

For example, it is assumed that the peer address configured for the node A is the host address 2.2.2.2 of the node B, a next hop to the address 2.2.2.2 in locally configured routing information of the node A is 10.1.1.2, and the node A may use the primary address 10.1.1.1 of the interface A1 to establish a peer relationship with the node B, so that a link discovered by the node A may be 10.1.1.1 (source address) → 10.1.1.2 (destination address). It is assumed that the peer address configured for the node A is the host address 2.2.2.2 of the node B, a next hop to the address 2.2.2.2 in locally configured routing information of the node A is 10.2.1.2, and the node A may use the primary address 10.2.1.1 of the interface A2 to establish a peer relationship with the node B, so that a link discovered by the node A may be 10.2.1.1 (source address) → 10.2.1.2 (destination address). It is assumed that the peer address configured for the node A is the host address 2.2.2.2 of the node B, and next hops to the address 2.2.2.2 in locally configured routing information of the node A include 10.1.1.2 and 10.2.1.2. The node A may use the primary address 10.1.1.1 of the interface A1 to establish a peer relationship with the node B, or use the primary address 10.2.1.1 of the interface A2 to establish a peer relationship with the node B, so that a link discovered by the node A may be 10.1.1.1 (source address) → 10.1.1.2 (destination address) or 10.2.1.1 (source address) → 10.2.1.2 (destination address). It is assumed that the peer address configured for the node A is the primary address 10.1.1.2 of the interface B1 of the node B. The node A may use the primary address 10.1.1.1 of the interface A1 to establish a peer relationship with the node B, so that a link discovered by the node A may be 10.1.1.1 (source address) → 10.1.1.2 (destination address). It is assumed that the peer address configured for the node A is the primary address 10.2.1.2 of the interface B2 of the node B, and the node A may use the primary address 10.2.1.1 of the interface A2 to establish a peer relationship with the node B, so that a link discovered by the node A may be 10.2.1.1 (source address) → 10.2.1.2 (destination address). It is assumed that the peer address configured for the node A is the secondary address 10. 1.2.2 of the interface B1 of the node B. The node A may use the secondary address 10.1.2.1 of the interface A1 to establish a peer relationship with the node B, so that a link discovered by the node A may be 10.1.2.1 (source address) → 10.1.2.2 (destination address).

For another example, it is assumed that the peer address configured for the node B is the host address 1.1.1.1 of the node A, a next hop to the address 1.1.1.1 in locally configured route information of the node B is 10.1.1.1, and the node B may use the primary address 10.1.1.2 of the interface B1 to establish a peer relationship with the node A, so that a link discovered by the node B may be 10.1.1.2 (source address) → 10.1.1.1 (destination address). It is assumed that the peer address configured for the node B is the host address 1.1.1.1 of the node A, a next hop to the address 1.1.1.1 in locally configured routing information of the node B is 10.2.1.1, and the node B may use the primary address 10.2.1.2 of the interface B2 to establish a peer relationship with the node A, so that a link discovered by the node B may be 10.2.1.2 (source address) → 10.2.1.1 (destination address). It is assumed that the peer address configured for the node B is the host address 1.1.1.1 of the node A, and next hops to 1.1.1.1 in locally configured routing information of the node B include 10.1.1.1 and 10.2.1.1. The node B may use the primary address 10.1.1.2 of the interface B1 to establish a peer relationship with the node B, or use the primary address 10.2.1.2 of the interface B2 to establish a peer relationship with the node B, so that a link discovered by the node B may be 10.1.1.2 (source address) → 10.1.1.1 (destination address) or 10.2.1.2 (source address) → 10.2.1.1 (destination address). It is assumed that the peer address configured for the node B is the primary address 10.1.1.1 of the interface A1 of the node A, and the node B may use the primary address 10.1.1.2 of the interface B1 to establish a peer relationship with the node B, so that a link discovered by the node B may be 10.1.1.2 (source address) → 10.1.1.1 (destination address). It is assumed that the peer address configured for the node B is the primary address 10.2.1.1 of the interface A2 of the node A, and the node B may use the primary address 10.2.1.2 of the interface B2 to establish a peer relationship with the node A, so that a link discovered by the node B may be 10.2.1.2 (source address) → 10.2.1.1 (destination address). It is assumed that the peer address configured for the node B is the secondary address 10.1.2.1 of the interface A1 of the node A, and the node B may use the secondary address 10.1.2.2 of the interface B1 to establish a peer relationship with the node A, so that a link discovered by the node B may be 10.1.2.2 (source address) → 10.1.2.1 (destination address).

Because a link discovered by a node is a unidirectional link (for example, the links discovered by the node A and the node B), a pair of neighbor nodes may discover two unidirectional links. In a current technology, after collecting links discovered by nodes in an entire network, any one of the nodes may perform validity check on two unidirectional links discovered by any pair of neighbor nodes, and determine whether the two unidirectional links correspond to a same bidirectionally reachable link. If the two unidirectional links correspond to one bidirectionally reachable link, it indicates that the pair of neighbor nodes may perform bidirectional communication based on a same link, so that when calculating a shortest path tree (shortest path tree, SPT), the node may determine that the pair of neighbor nodes are interconnected. In this case, it may be considered that the two unidirectional links are valid link information. For example, validity check is performed on a link discovered by the node A and a link discovered by the node B. It is assumed that the link discovered by the node A is 10.1.1.1 (source address) → 10.1.1.2 (destination address), and the link discovered by the node B is 10.1.1.2 (source address) → 10.1.1.1 (destination address). It can be learned that the source address of the link discovered by the node A is the destination address of the link discovered by the node B, and the destination address of the link discovered by the node A is the source address of the link discovered by the node B. The two unidirectional links correspond to a same bidirectionally reachable link (that is, a bidirectional link that uses the address 10.1.1.1 and the address 10.1.1.2 as endpoints). In addition, the address 10.1.1.1 and the address 10.1.1.2 are in a same network segment, so that the node A and the node B may perform bidirectional communication based on the address 10.1.1.1 and the address 10.1.1.2. Therefore, the two unidirectional links are valid link information.

However, in some cases, a link discovered by a node in a network may be invalid link information. For example, two unidirectional links discovered by a pair of neighbor nodes do not correspond to a same bidirectional link, or addresses of two ends of a link do not belong to a same network segment. Distributing the invalid link information wastes communication resources, and the invalid link information also increases processing load of a node.

For example, it is assumed that the peer address configured for the node A is 10.1.1.2, the node A uses the local address 10.1.1.1 to establish a peer relationship, and the link discovered by the node A is 10.1.1.1 (source address) → 10.1.1.2 (destination address). The peer address configured for the node B is 10.2.1.1, the node B uses the address 10.2.1.2 to establish a peer relationship, and the link discovered by the node B is 10.2.1.2 (source address) → 10.2.1.1 (destination address). In this case, the source address of the link discovered by the node A is not the destination address of the link discovered by the node B, and the destination address of the link discovered by the node A is not the source address of the link discovered by the node B. The two unidirectional links cannot correspond to a same bidirectionally reachable link, and therefore the two unidirectional links are invalid link information.

For another example, it is assumed that the peer address configured for the node A is 10.1.1.2, the node A uses the local address 10.1.1.1 to establish a peer relationship, and the link discovered by the node A is 10.1.1.1 (source address) → 10.1.1.2 (destination address). The peer address configured for the node B is 1.1.1.1. The node B can use 10.1.1.2 or 10.2.1.2 to establish a peer relationship. The link discovered by the node B is 10.2.1.2 (source address) → 10.2.1.1 (destination address) or 10.1.1.2 (source address) → 10.1.1.1 (destination address). When the link discovered by the node B is 10.2.1.2 (source address) → 10.2.1.1 (destination address), the link discovered by the node A and the link discovered by the node B cannot correspond to the same bidirectionally reachable link.

For another example, it is assumed that the peer address configured for the node A is 10.1.1.2, the node A uses the address 10.1.2.1 to establish a peer relationship, and the link discovered by the node A is 10.1.2.1 (source address) → 10.1.1.2 (destination address). The peer address configured for the node B is 10.1.2.1, the node B uses the address 10.1.1.2 to establish a peer relationship, and the link discovered by the node B is 10.1.1.2 (source address) → 10.1.2.1 (destination address). In this case, the source address of the link discovered by the node A is the destination address of the link discovered by the node B, and the destination address of the link discovered by the node A is the source address of the link discovered by the node B. However, because 10.1.2.1 is the secondary address of the interface A, and 10.1.1.2 is the primary address of the interface B 1, the two addresses are located in different network segments. An address mask 255.255.255.0 is used as an example. A network address corresponding to 10.1.2.1 is 10.1.2.0, and a network address corresponding to 10.1.1.2 is 10.1.1.0. Network addresses of the two addresses are different and belong to different network segments. Addresses of different network segments cannot be interconnected. Therefore, 10.1.2.1 and 10.1.1.2 cannot form a bidirectionally reachable link.

To resolve a problem in a current technology, this application provides a link information sending method, to avoid a waste of communication resources caused by distributing invalid link information.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner for ease of understanding.

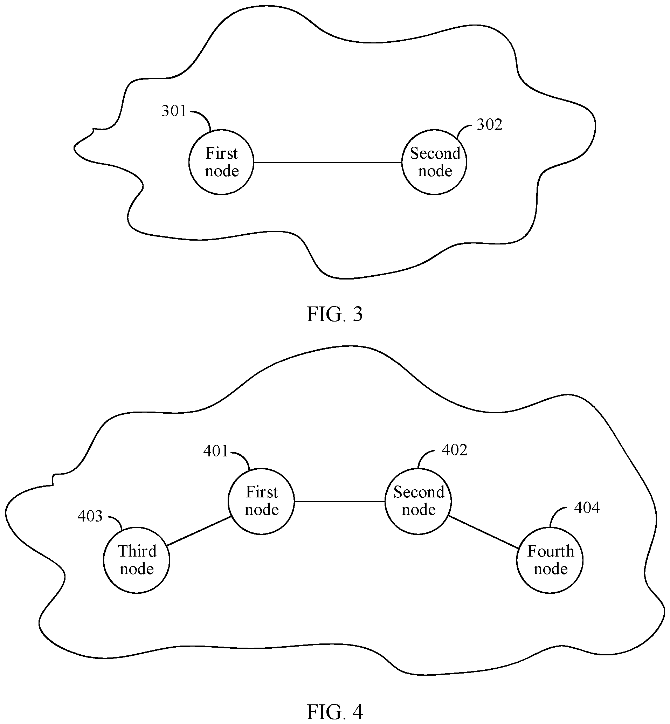

FIG. 3 is a schematic diagram of a communication system according to an embodiment of this application. As shown in FIG. 3, the communication system may include a first node 301 and a second node 302, and the first node 301 is connected to the second node 302. Optionally, the communication system may further include another node, and the first node 301 and the second node 302 may be further connected to the another node, which is not shown in FIG. 3.

FIG. 4 is a schematic diagram of another communication system according to an embodiment of this application. As shown in FIG. 4, the communication system may include a first node 401, a second node 402, a third node 403, and a fourth node 404. The first node 401 is connected to the second node 402, the first node 401 is further connected to the third node 403, and the second node 402 is further connected to the fourth node 404. Optionally, the communication system may further include another node, and the first node 401, the second node 402, the third node 403, and the fourth node 404 may be further connected to the another node, which is not shown in FIG. 4.

Optionally, in embodiments of this application, a node (for example, the first node, the second node, the third node, or the fourth node) in the communication system may be a routing device or a forwarding device, for example, a device such as a router or a switch.

It should be noted that connection lines between nodes in FIG. 3 and FIG. 4 indicates that there are connection relationships between the nodes, and a quantity of the connection lines in the figures does not constitute a limitation on a quantity of links or channels between the nodes. This is described herein in a unified manner.

It should be understood that the communication system described in embodiments of this application is intended to describe the technical solutions in embodiments of this application more clearly, and does not constitute a limitation on the technical solutions provided in embodiments of this application. A person of ordinary skill in the art may learn that, with development of communications technologies and emergence of a new communication system, the technical solutions provided in embodiments of this application are also applicable to a similar technical problem.

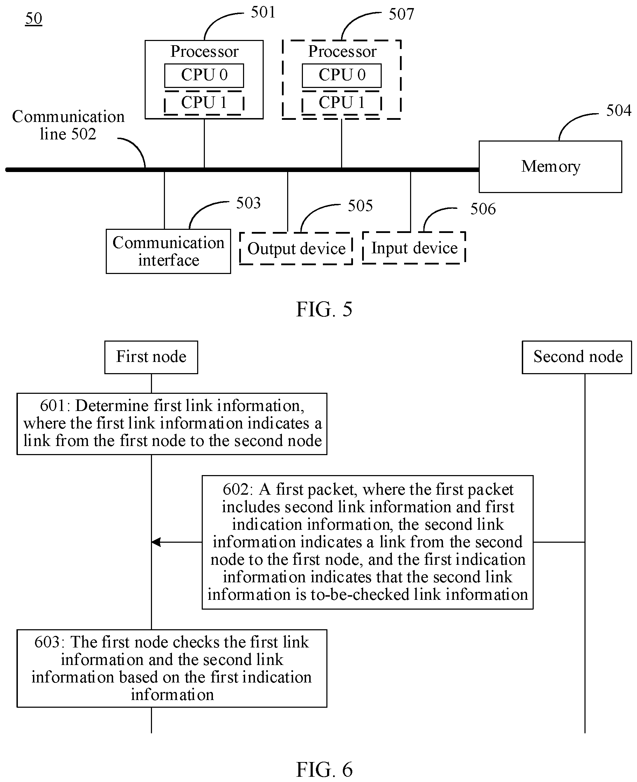

Optionally, the first node and the second node in embodiments of this application may alternatively be referred to as communication devices, and the first node and the second node may use a composition structure shown in FIG. 5 or include components shown in FIG. 5. FIG. 5 is a schematic structural diagram of a communication device 50 according to an embodiment of this application. As shown in FIG. 5, the communication device 50 includes one or more of a processor 501, a communication line 502, and at least one communication interface (in FIG. 5, only an example in which a communication interface 503 and one processor 501 are included is used for description), and optionally, may further include a memory 504.

The processor 501 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 502 may include a path used for communication between different components.

The communication interface 503 may be a transceiver module configured to communicate with another device or communication network, for example, an Ethernet, a RAN, or a wireless local area network (wireless local area network, WLAN). For example, the transceiver module may be an apparatus such as a transceiver or a transceiver machine. Optionally, the communication interface 503 may alternatively be a transceiver circuit located in the processor 501, and is configured to implement signal input and signal output of the processor.

The memory 504 may be an apparatus having a storage function. For example, the memory may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact optical disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer. This is not limited thereto. The memory may exist independently, and be connected to the processor through the communication line 502. The memory may alternatively be integrated with the processor.

The memory 504 is configured to store computer-executable instructions for executing the solutions of this application, and the processor 501 controls execution. The processor 501 is configured to execute the computer-executable instructions stored in the memory 504, to implement the link information sending method provided in embodiments of this application.

Alternatively, optionally, in embodiments of this application, the processor 501 may perform a processing-related function in the link information sending method provided in the following embodiment of this application, and the communication interface 503 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication device 50 may include a plurality of processors, for example, the processor 501 and a processor 507 in FIG. 5. Each of the processors may be a single-core (single-core) processor or a multi-core (multi-core) processor. The processor herein may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions.

During specific implementation, in an embodiment, the communication device 50 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive user input in a plurality of manners. For example, the input device 506 may be a mouse, a keyboard, a touchscreen device, or a sensor device.

The communication device 50 may sometimes alternatively be referred to as a communication apparatus, and may be a general-purpose device or a dedicated device. For example, the communication device 50 may be a network device such as a router, a switch, or a gateway, or a terminal device, or a controller in a network, or a device having a structure similar to that in FIG. 5. A type of the communication device 50 is not limited in embodiments of this application.

The following describes, with reference to FIG. 1 to FIG. 5, a link information sending method provided in this embodiment of this application. The device in the following embodiment may have components shown in FIG. 5. Actions, terms, and the like in this embodiment of this application may be mutually referenced. This is not limited. In this embodiment of this application, a message name, a parameter name in a message, or the like is merely an example. During specific implementation, another name may be used. This is not limited.

FIG. 6 is a flowchart of a link information sending method according to an embodiment of this application. As shown in FIG. 6, the link information sending method may include the following steps.

Step 601: A first node determines first link information, where the first link information indicates a link from the first node to a second node.

The second node is a neighbor node of the first node.

Optionally, configuration information of the first node may include information about the neighbor node, and the information about the neighbor node may include an address of the second node.

Optionally, the information about the neighbor node may include an address of the neighbor node and a local interface/address to the neighbor node. The information about the neighbor node may further include a number (number) of an autonomous system (autonomous system, AS) in which the neighbor node is located.

For example, the information about the neighbor node in the configuration information of the first node may be shown as follows:
bgp 100
peer 10.1.1.2 as-number 200
peer 10.1.1.2 connect-interface interface 1

Bgp 100 indicates that a number of an AS in which the first node is located is 100. Peer 10.1.1.2 indicates that an IP address of the neighbor node of the first node is 10.1.1.2. Peer 10.1.1.2 as-number 200 indicates that a number of an AS in which the neighbor node with an IP address of 10.1.1.2 is located is 200. Peer 10.1.1.2 connect-interface interface 1 indicates that a local interface of the first node to the IP address 10.1.1.2 is interface (interface) 1.

Optionally, the configuration information of the first node may further include address information of the first node, and the address information may include a host address (for example, a loopback address) of the first node and/or an interface address.

For example, the address information of the first node in the local configuration information of the first node may be shown as follows:
interface 1
   ip address 10.1.1.1 255.255.255.0
interface 2
   ip address 10.2.1.1 255.255.255.0

It can be learned from the address information that the first node has two interfaces: interface 1 and interface 2. An IP address (address) of interface 1 is 10.1.1.1 and an address mask is 255.255.255.0. An IP address of interface 2 is 10.2.1.1 and an address mask is 255.255.255.0.

Optionally, the configuration information of the first node may further include additional information. In a possible implementation, the additional information may include a link state routing protocol used by the first node, enabling information, and the like.

For example, the additional information in the local configuration information of the first node may be shown as follows:
#
link-state-family spf
peer 10.1.1.2 enable

Refer to the foregoing additional information. Link (link)-state (state)-family (family) spf may indicate that the link state routing protocol used by the first node is an SPF protocol, and peer 10.1.1.2 enable (enable) indicates that a peer address 10.1.1.2 is in an enabled state, and a peer relationship may be established with the address.

Optionally, the first link information may include a first source address and a first destination address. The first source address is an address of the first node, and the first destination address is the address of the second node, so that the first link information may indicate the link from the first node to the second node.

In this embodiment of this application, the first node may determine the first link information based on the information about the neighbor node in the configuration information of the first node. For example, the first node may determine a link to the neighbor node based on the peer address, and the link information is the first link information.

The configuration information of the first node is used as an example. It is assumed that 10.1.1.2 is the address of the second node, the first node may determine, based on the peer address 10.1.1.2, that the link to the neighbor node (that is, the second node) is 10.1.1.1 -> 10.1.1.2, so that the first link information determined by the first node may be {10.1.1.1, 10.1.1.2}, where 10.1.1.1 is the first source address and 10.1.1.2 is the first destination address.

Step 602: The first node receives a first packet from the second node, where the first packet includes second link information and first indication information, the second link information indicates a link from the second node to the first node, and the first indication information indicates that the second link information is to-be-checked link information.

Optionally, configuration information of the second node may include information about a neighbor node, and the information about the neighbor node may include the address of the first node. In this way, the second node may determine the second link information based on the information about the neighbor node.

It should be noted that, for the configuration information of the second node, refer to related descriptions of the configuration information of the first node. Details are not described herein again.

For example, the configuration information of the second node may be shown as follows:
interface 1
   ip address 10.1.1.2 255.255.255.0
interface 2
   ip address 10.2.1.2 255.255.255.0
bgp 200
   peer 10.2.1.1 as-number 100
   peer 10.2.1.1 connect-interface interface 2
#
   link-state-family spf
   peer 10.2.1.1 enable

It can be learned from the configuration information of the second node that the second node has two interfaces: interface 1 and interface 2. An IP address (address) of interface 1 is 10.1.1.1 and an address mask is 255.255.255.0. An IP address of interface 2 is 10.2.1.1 and an address mask is 255.255.255.0. Bgp 200 indicates that a number of an AS in which the second node is located is 200. Peer 10.2.1.1 indicates that an IP address of the neighbor node of the second node is 10.2.1.1. Peer 10.2.1.1 as-number 100 indicates that a number of an AS in which the neighbor node with an IP address of 10.1.1.2 is located is 100. Peer 10.2.1.1 connect-interface interface 2 indicates that a local interface of the second node to the IP address 10.2.1.1 is interface 2. In addition, link-state-family spf may indicate that a link state routing protocol used by the second node is the SPF protocol, and peer 10.2.1.1 enable indicates that the peer address 10.2.1.1 is in an enabled state, and a peer relationship may be established with the address.

Optionally, the second link information may include a second source address and a second destination address, where the second source address is the address of the second node, and the second destination address is the address of the first node, so that the second link information may indicate the link from the second node to the first node.

For example, 10.2.1.1 is the address of the first node. The second node may discover a link to the first node: 10.2.1.2 -> 10.2.1.1, and the second link information determined by the second node may be { 10.2.1.2, 10.2.1.1}. 10.2.1.2 is the second source address, and 10.2.1.1 is the second destination address.

Optionally, the first packet may be a BGP packet, for example, a BGP update packet. The BGP update packet may alternatively be referred to as a BGP update message (BGP update message). The second link information may be carried in the BGP update packet.

Optionally, a document No. 7752 (that is, RFC 7752) in a request for comments (request for comments, RFC) file distributed by the Internet Engineering Task Force (internet engineering task force, IETF) records a format of a packet/message used to transfer BGP link state information. In a possible implementation, the first packet in this embodiment of this application may be implemented based on the format of the packet/message defined in RFC 7752.

Optionally, the first packet may include a network reachability layer information (network layer reachability information, NLRI) field, where the NLRI may be node network reachability layer information (node NLRI), link network reachability layer information (link NLRI), or prefix network reachability layer information (prefix NLRI). For example, for the NLRI field in the first packet, refer to a definition in RFC 7752. In a possible implementation, the second link information may be carried in the link NLRI field.

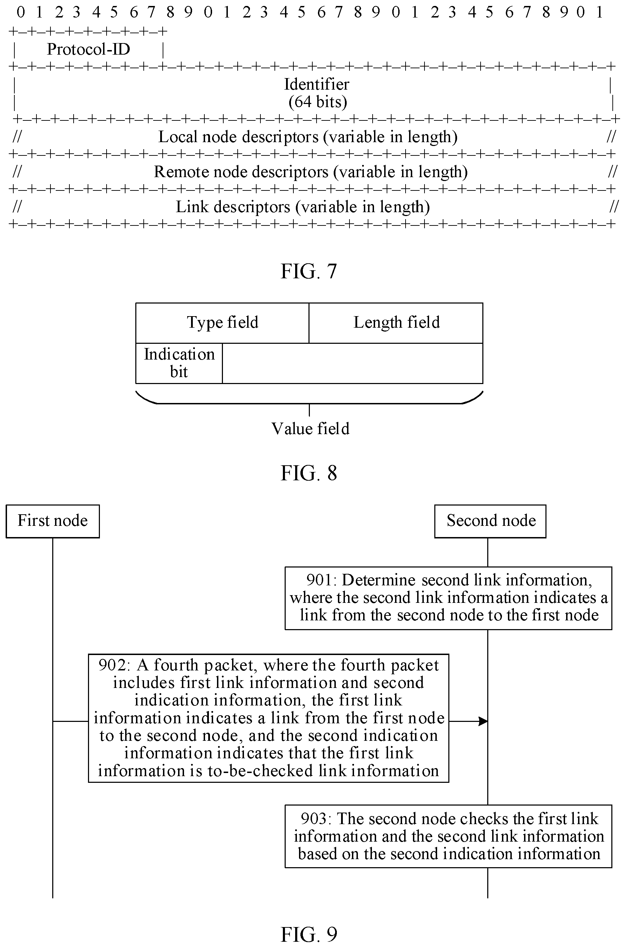

FIG. 7 is a schematic diagram of a format of a link NLRI field. As shown in FIG. 7, the link NLRI field may include a protocol identifier (protocol identifier, Protocol-ID) field, an identifier (identifier) field, a local node descriptor (local node descriptor) field, a remote node descriptor (remote node descriptor) field, and a link descriptor (link descriptor) field. A length of the protocol-ID (that is, Protocol-ID) field may be 8 bits (bits), a length of the identifier field may be 64 bits, and lengths of the local node descriptor field, the remote node descriptor field, and the link descriptor field may be variable. In a possible implementation, the second link information may be carried in the link descriptor field of the link NLRI field.

Optionally, the first packet may further include an attribute (attribute) field. The attribute field may specifically include a link attribute (link attribute) field, and indicates attribute information associated with a link indicated by the NLRI field. For example, for the attribute field and the link attribute field in the first packet, refer to the definition in RFC 7752.

Optionally, the link attribute field in the first packet may be encoded in a format of a type-length-value (type-length-value, TLV) field, and the link attribute field may include at least one TLV field.

Optionally, the first indication information may be carried in a first TLV field, and the first TLV field may be located in the link attribute field. It should be noted that the first TLV field is a newly defined TLV field in this application, and is different from another TLV field of the link attribute field in the existing protocol.

Optionally, the first TLV field may include a type (type) field, a length (length) field, and a value (value) field. Atype value of the first TLV field is different from a type value of another TLV field of the link attribute field in the existing protocol, and the type value is a value of the type field. In this embodiment of this application, the value field of the first TLV field may be used to carry the first indication information, and the first indication information indicates that the second link information is the to-be-checked link information. In other words, the value field of the first TLV field may indicate that the second link information is the to-be-checked link information.

In a possible implementation, at least one bit in the value field may be used as an indication bit. When the indication bit is a first value, it indicates that the second link information is the to-be-checked link information. The first value may be understood as the first indication information. For example, it is assumed that the indication bit is 1 bit, it may be specified that when a value of the indication bit is 1, it indicates that the second link information is the to-be-checked link information.

FIG. 8 is a schematic structural diagram of a first TLV field. As shown in FIG. 8, the first TLV field may include a type field, a length field, and a value field. A length of the type field and the length field may be 16 bits (that is, 2 bytes), and a length of the value field is 32 bits (that is, 4 bytes). Still refer to FIG. 8. The length field includes an indication bit, and the indication bit may be used to carry the first indication information.

Optionally, an attribute of the first TLV field includes a non-transitive attribute, and the non-transitive attribute indicates that the first TLV field is not to be forwarded. In other words, the first TLV field is transferred from the second node to the first node, and is not forwarded to another node. Based on this, if the first node needs to forward the first packet, the first node discards the first TLV field when forwarding the first packet. Therefore, when the second link information is forwarded by the first node to another node, the first TLV field does not need to be carried to indicate that the second link information is the to-be-checked link information. In other words, the second link information discovered by the second node is only checked by the first node, and another node may directly forward the second link information without checking. This solution can avoid a waste of processing resources of the another node due to validity check performed by each node, and can reduce complexity of implementing the solutions.

Step 603: The first node checks the first link information and the second link information based on the first indication information.

After receiving the first packet, the first node may learn, based on the first indication information in the first packet, that the second link information is the to-be-checked link information. In this case, the first node may check the first link information and the second link information.

In this embodiment of this application, that the first node checks the first link information and the second link information may include: The first node determines whether the first source address is the same as the second destination address, and whether the first destination address is the same as the second source address. In addition, when the first source address is the same as the second destination address, and the first destination address is the same as the second source address, the first node determines whether the source address and the destination address are in a same network segment.

Optionally, in this embodiment of this application, if the first source address is the same as the second destination address, the second source address is the same as the first destination address, and the first source address, the first destination address, the second source address, and the second destination address are in the same network segment, the first node may consider that the first link information and the second link information meet a validity check condition.

Optionally, if the first link information and the second link information meet the validity check condition, the first node may determine that the first link information and the second link information are used for BGP SPT calculation. If the first link information and the second link information do not meet the validity check condition, the first node may determine that the first link information and the second link information are not used for the BGP SPT calculation.

It should be noted that if the first source address is the same as the second destination address, the second source address is the same as the first destination address, and the first source address, the first destination address, the second source address, and the second destination address are in the same network segment, it indicates that the first link information and the second link information correspond to a same bidirectionally reachable link, and the first source address and the first destination address are bidirectionally interconnected. Therefore, when BGP SPT is calculated, it may be marked that the first node and the second node are interconnected, and addresses of two ends of the link are the first source address and the first destination address.

Optionally, if the first link information and the second link information meet the validity check condition, the first node may distribute the first link information and the second link information in an entire network. In a possible implementation, if the first link information and the second link information meet the validity check condition, the first node may send a second packet to a neighbor node except the second node, where the second packet includes the first link information. In a possible implementation, if the first link information and the second link information meet the validity check condition, the first node may send a third packet to a neighbor node except the second node, where the third packet includes the second link information.

Optionally, the third packet does not include the first indication information. Based on this solution, in this embodiment of this application, only the first node checks the second link information when receiving the second link information, and another node may directly forward the second link information when receiving the second link information. This solution can avoid a waste of processing resources of the another node due to validity check performed by each node, and can reduce complexity of implementing the solutions.

Optionally, if the first link information and the second link information do not meet the validity check condition, the first node determines not to send the first link information and the second link information to the neighbor node except the second node. Based on this solution, the first node distributes the first link information and the second link information only when the first link information and the second link information meet the validity check condition. In this solution, distribution of invalid link information and occupation of communication resources can be avoided.

FIG. 9 is a flowchart of another link information sending method according to an embodiment of this application. As shown in FIG. 9, the link information sending method may include the following steps.

Step 901: A second node determines second link information, where the second link information indicates a link from the second node to a first node.

For related content of the second link information, refer to the descriptions of the second link information in step 602. Details are not described herein again.

Step 902: The second node receives a fourth packet from the first node, where the fourth packet may include first link information and second indication information, the first link information indicates a link from the first node to the second node, and the second indication information indicates that the first link information is to-be-checked link information.

For the first link information, refer to the descriptions of the first link information in step 601. Details are not described herein again.

Optionally, the fourth packet may be a BGP update packet, and the second indication information is carried in a second TLV field of the fourth packet. It should be noted that the fourth packet is similar to the first packet. For the fourth packet, refer to related descriptions of the first packet. For the second indication information, refer to related descriptions of the first indication information. For the second TLV field, refer to related descriptions of the first TLV field. Details are not described herein again.

Optionally, an attribute of the second TLV field includes a non-transitive attribute, and the non-transitive attribute indicates that the second TLV field is not to be forwarded. In other words, the second TLV field is transferred from the first node to the second node, and is not forwarded to another node. Based on this, if the second node needs to forward the fourth packet, the second node discards the second TLV field when forwarding the fourth packet. Therefore, when the first link information is forwarded by the second node to another node, the second TLV field does not need to be carried to indicate that the first link information is the to-be-checked link information.

Step 903: The second node checks the first link information and the second link information based on the second indication information.

It should be noted that, a process in which the second node checks the first link information and the second link information is the same as a process in which the first node checks the first link information and the second link information. For details, refer to related descriptions in step 603.

A validity check condition that the first link information and the second link information meet is the same as the validity check condition in step 603.

Optionally, if the first link information and the second link information meet the validity check condition, the second node may determine that the first link information and the second link information are used for BGP SPT calculation. If the first link information and the second link information do not meet the validity check condition, the second node may determine that the first link information and the second link information are not used for the BGP SPT calculation.

Optionally, if the first link information and the second link information meet the validity check condition, the second node needs to distribute the first link information and the second link information in an entire network. In a possible implementation, if the first link information and the second link information meet the validity check condition, the second node may further send a fifth packet to a neighbor node except the first node, where the fifth packet includes the second link information. In a possible implementation, if the first link information and the second link information meet the validity check condition, the second node may further send a sixth packet to a neighbor node except the first node, where the sixth packet includes the first link information.

Optionally, the sixth packet does not include the second indication information. Based on this solution, in this embodiment of this application, only the second node checks the first link information when receiving the first link information, and another node may directly forward the first link information when receiving the first link information.

Optionally, if the first link information and the second link information do not meet the validity check condition, the second node determines not to send the first link information and the second link information to the neighbor node except the first node. Based on this solution, the second node distributes the first link information and the second link information only when the first link information and the second link information meet the check condition. In this solution, distribution of invalid link information and occupation of communication resources can be avoided.

It should be noted that, according to the link information sending methods shown in the foregoing embodiments of this application, in the link information sending methods provided in this application, a check step is added before a node distributes link information discovered by the node, so that all link information distributed by the node is valid link information. Based on this, another node except nodes at two ends of an invalid link does not sense an invalid link, so that in a process of distributing link information in an entire network, receiving and sending processing of the invalid link information is reduced, and receiving and sending performance of the entire network is greatly improved.

Optionally, in the solutions of this application, all the link information distributed in the entire network is the valid link information, so that after the link information in the entire network is distributed, a node does not need to perform link validity check, and may directly use the collected link information to perform route calculation. Therefore, processing load and power consumption of the node can be greatly reduced, and performance of the entire network can be improved.

It should be noted that the link information sending methods provided in this application may be applied to the communication system shown in FIG. 3 or FIG. 4. When the link information sending methods are applied to the communication system shown in FIG. 4, if the first link information and the second link information meet the validity check condition, the first node may send the first link information and the second link information to a third node, and the second node may send the first link information and the second link information to a fourth node.

It should be noted that a length of each field in embodiments of this application is merely an example for description. In actual application, the length of each field may be another value. The length of the field is not specifically limited in this application.

It should be noted that in the foregoing method embodiments, the processor 501 in the communication device 50 shown in FIG. 5 may invoke the application program code stored in the memory 504 to instruct the first node to perform an action of the first node, and the processor 501 in the communication device 50 shown in FIG. 5 may invoke the application program code stored in the memory 504 to instruct the second node to perform an action of the second node.

It may be understood that, in the foregoing embodiments, the methods and/or the steps implemented by the first node may alternatively be implemented by a component (for example, a chip or a circuit) that may be used for the first node, and the methods and/or the steps implemented by the second node may alternatively be implemented by a component (for example, a chip or a circuit) that may be used for the second node.

Optionally, embodiments of this application further provide a communication apparatus. The communication apparatus is configured to implement the foregoing methods. The communication apparatus may be the first node in the foregoing method embodiments, an apparatus including the first node, or a component that can be used for the first node. Alternatively, the communication apparatus may be the second node in the foregoing method embodiments, an apparatus including the second node, or a component that can be used for the second node. It may be understood that to implement the foregoing functions, the communication apparatus includes a hardware structure and/or a software module for performing a corresponding function. A person skilled in the art should easily be aware that in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

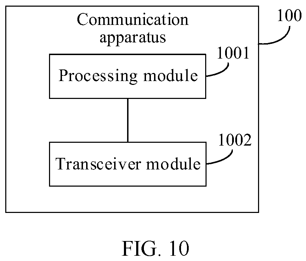

FIG. 10 is a schematic structural diagram of a communication apparatus 100. The communication apparatus 100 includes a processing module 1001 and a transceiver module 1002. The transceiver module 1002 may alternatively be referred to as a transceiver unit, and is configured to implement a transceiver function. For example, the transceiver module 1002 may be a transceiver circuit, a transceiver machine, a transceiver, or a communication interface.

For example, the communication apparatus 100 is the first node in the foregoing method embodiments.

The processing module 1001 may be configured to determine first link information, where the first link information indicates a link from the first node to a second node. The transceiver module 1002 may be configured to receive a first packet from the second node, where the first packet includes second link information and first indication information, the second link information indicates a link from the second node to the first node, and the first indication information indicates that the second link information is to-be-checked link information. The processing module 1001 may be further configured to check the first link information and the second link information based on the first indication information.

Optionally, if the first link information and the second link information meet a validity check condition, the processing module 1001 may be further configured to determine that the first link information and the second link information are used for BGP SPT calculation.

Optionally, if the first link information and the second link information meet the validity check condition, the transceiver module 1002 may be further configured to send a second packet to a neighbor node except the second node, where the second packet includes the first link information.

Optionally, if the first link information and the second link information meet the validity check condition, the transceiver module 1002 may be further configured to send a third packet to a neighbor node except the second node, where the third packet includes the second link information.

Optionally, if the first link information and the second link information do not meet the validity check condition, the processing module 1001 may be further configured to determine that the first link information and the second link information are not used for the BGP SPT calculation.

Optionally, if the first link information and the second link information do not meet the validity check condition, the processing module 1001 may be further configured to determine not to send the first link information and the second link information to a neighbor node except the second node.

Optionally, the transceiver module 1002 may be further configured to send a fourth packet to the second node, where the fourth packet includes the first link information and second indication information, and the second indication information indicates that the first link information is to-be-checked link information.

For example, the communication apparatus 100 is the second node in the foregoing method embodiments.

The processing module 1001 may be configured to determine the second link information, where the second link information indicates a link from the second node to the first node. The transceiver module 1002 may be configured to receive the fourth packet from the first node, where the fourth packet may include the first link information and the second indication information, the first link information indicates the link from the first node to the second node, and the second indication information indicates that the first link information is the to-be-checked link information. The processing module 1001 may be further configured to check the first link information and the second link information based on the second indication information.

Optionally, if the first link information and the second link information meet the validity check condition, the processing module 1001 may be further configured to determine that the first link information and the second link information are used for the BGP SPT calculation.

Optionally, if the first link information and the second link information meet the validity check condition, the transceiver module 1002 may be further configured to send a fifth packet to a neighbor node except the first node, where the fifth packet includes the second link information.

Optionally, if the first link information and the second link information meet the validity check condition, the transceiver module 1002 may be further configured to send a sixth packet to a neighbor node except the first node, where the sixth packet includes the first link information.

Optionally, if the first link information and the second link information do not meet the validity check condition, the processing module 1001 may be further configured to determine that the first link information and the second link information are not used for the BGP SPT calculation.

Optionally, if the first link information and the second link information do not meet the validity check condition, the processing module 1001 may be further configured to determine not to send the first link information and the second link information to a neighbor node except the first node.

Optionally, the transceiver module 1002 may be further configured to send the first packet to the first node, where the first packet includes the second link information and the first indication information, and the first indication information indicates that the second link information is the to-be-checked link information.

It should be noted that all related content of the steps in the foregoing method embodiments may be cited in function description of corresponding functional modules. Details are not described herein again. Because the communication apparatus 100 provided in this embodiment may perform the foregoing link information sending method, for technical effects that can be achieved by the communication apparatus 100, refer to the foregoing method embodiments. Details are not described herein again.

Optionally, a service access network device, an anchor access network device, or a terminal device in embodiments of this application may alternatively be referred to as a communication apparatus, and may be a general-purpose device or a dedicated device. This is not specifically limited in embodiments of this application.

In this embodiment, the communication apparatus 100 is presented in a form of functional modules obtained through division in an integrated manner. The module herein may be a specific ASIC, a circuit, a processor and a memory that executes one or more software or firmware programs, an integrated logic circuit, and/or another component capable of providing the foregoing functions. In a simple embodiment, a person skilled in the art may figure out that the communication apparatus 100 may use a form of the communication device 50 shown in FIG. 5.

For example, the processor 501 in the communication device 50 shown in FIG. 5 may invoke the computer-executable instructions stored in the memory 504, so that the communication device 50 performs the link information sending methods in the foregoing method embodiments.

Specifically, a function/implementation process of the processing module 1001 and the transceiver module 1002 in FIG. 10 may be implemented by the processor 501 in the communication device 50 shown in FIG. 5 by invoking the computer-executable instructions stored in the memory 504. Alternatively, the function/implementation process of the processing module 1001 in FIG. 10 may be implemented by the processor 501 in the communication device 50 shown in FIG. 5 by invoking the computer-executable instructions stored in the memory 504, and the function/implementation process of the transceiver module 1002 in FIG. 10 may be implemented by the communication interface 503 in the communication device 50 shown in FIG. 5.

Because the communication apparatus 100 provided in this embodiment may perform the foregoing link information sending method, for technical effects that can be achieved by the communication apparatus 100, refer to the foregoing method embodiments. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Terms such as "component", "module", and "system" used in this application are used to indicate computer-related entities. The computer-related entities may be hardware, firmware, combinations of hardware and software, software, or software in running. For example, a component may be, but is not limited to, a process that is run on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system via a network such as the Internet by using a signal).

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, one of information (information), signal (signal), message (message), or channel (channel) may be used sometimes. It should be noted that expressed meanings are consistent when differences are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized. Sometimes, "system" and "network" may be used together. When the difference is not emphasized, the meanings to be expressed are consistent. For example, "communication network" also refers to "communication system".

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that: With evolution of the network architecture and emergence of new service scenarios, the technical solutions provided in embodiments of this application are also applicable to a similar technical problem.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A link information sending method, applied to a first node, wherein the method comprises:
determining first link information, wherein the first link information indicates a link from the first node to a second node;
receiving a first packet from the second node, wherein the first packet comprises second link information and first indication information, the second link information indicates a link from the second node to the first node, and the first indication information indicates that the second link information is to-be-checked link information; and
checking the first link information and the second link information based on the first indication information.

2. The method according to claim 1, wherein the first packet is a border gateway protocol BGP packet, and the first indication information is carried in a first type-length-value TLV field of the first packet.

3. The method according to claim 2, wherein an attribute of the first TLV field comprises a non-transitive attribute, and the non-transitive attribute indicates that the first TLV field is not to be forwarded.

4. The method according to any one of claims 1 to 3, wherein the method further comprises:
determining that the first link information and the second link information are used for BGP shortest path tree SPT calculation if the first link information and the second link information meet a validity check condition.

5. The method according to any one of claims 1 to 4, wherein the method further comprises:
sending a second packet to a neighbor node except the second node if the first link information and the second link information meet the validity check condition, wherein the second packet comprises the first link information.

6. The method according to any one of claims 1 to 5, wherein the method further comprises:
sending a third packet to a neighbor node except the second node if the first link information and the second link information meet the validity check condition, wherein the third packet comprises the second link information.

7. The method according to claim 6, wherein the third packet does not comprise the first indication information.

8. The method according to any one of claims 4 to 7, wherein the first link information comprises a first source address and a first destination address, and the second link information comprises a second source address and a second destination address; and that the first link information and the second link information meet the validity check condition comprises:
the first source address is the same as the second destination address, the second source address is the same as the first destination address, and the first source address, the first destination address, the second source address, and the second destination address are in a same network segment.

9. The method according to any one of claims 1 to 3, wherein the method further comprises: determining that the first link information and the second link information are not used for shortest path tree SPT calculation if the first link information and the second link information do not meet a validity check condition.

10. The method according to any one of claims 1 to 4, wherein the method further comprises:
determining not to send the first link information and the second link information to a neighbor node except the second node if the first link information and the second link information do not meet the validity check condition.

11. The method according to any one of claims 1 to 10, wherein the method further comprises:
sending a fourth packet to the second node, wherein the fourth packet comprises the first link information and second indication information, and the second indication information indicates that the first link information is to-be-checked link information.

12. The method according to claim 11, wherein the fourth packet is a BGP packet, and the second indication information is carried in a second TLV field of the fourth packet.

13. The method according to claim 12, wherein an attribute of the second TLV field comprises a non-transitive attribute, and the non-transitive attribute indicates that the second TLV field is not to be forwarded.

14. A communication system, wherein the communication system comprises a first node and a second node;
the first node determines first link information, wherein the first link information indicates a link from the first node to the second node;
the second node sends a first packet to the first node, wherein the first packet comprises second link information and first indication information, the second link information indicates a link from the second node to the first node, and the first indication information indicates that the second link information is to-be-checked link information; and
the first node checks the first link information and the second link information based on the first indication information.

15. A communication system, wherein the communication system comprises a first node, a second node, and a third node;
the first node determines first link information, wherein the first link information indicates a link from the first node to the second node;
the second node sends a first packet to the first node, wherein the first packet comprises second link information and first indication information, the second link information indicates a link from the second node to the first node, and the first indication information indicates that the second link information is to-be-checked link information;
the first node checks the first link information and the second link information based on the first indication information; and
if the first link information and the second link information meet a validity check condition, the first node sends the first link information and the second link information to the third node.

16. A communication apparatus, wherein the communication apparatus comprises a processor and a memory; and
the memory is configured to store computer-executable instructions, and when the processor executes the computer-executable instructions, the communication apparatus is enabled to perform the method according to any one of claims 1 to 13.

17. A computer-readable storage medium, wherein the computer-readable storage medium stores a computer program, and when the computer program is executed by a computer, the computer is enabled to perform the method according to any one of claims 1 to 13.
